(19) Europäisches Patentamt
European Patent Office
Office européen des brevets

(11) EP 4 496 059 A2

(12) EUROPEAN PATENT APPLICATION

(43) Date of publication:
**22.01.2025 Bulletin 2025/04**

(21) Application number: **24188672.0**

(22) Date of filing: **15.07.2024**

(51) International Patent Classification (IPC):
***H01M 10/0525*** *(2010.01)* ***H01M 50/414*** *(2021.01)*
***H01M 50/434*** *(2021.01)* ***H01M 50/446*** *(2021.01)*
***H01M 50/449*** *(2021.01)*

(52) Cooperative Patent Classification (CPC):
**H01M 50/446; H01M 10/0525; H01M 50/414; H01M 50/434; H01M 50/449**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.07.2023 KR 20230094451**

(71) Applicants:
- **SK Innovation Co., Ltd.**
**Seoul 03188 (KR)**
- **SK ie technology Co., Ltd.**
**Jongno-gu**
**Seoul**
**03188 (KR)**

(72) Inventors:
- **KWON, Tae Wook**
**34124 Daejeon (KR)**
- **CHO, Kyu Young**
**34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR AND LITHIUM SECONDARY BATTERY COMPRISING THE SAME**

(57) Separators and lithium secondary batteries including the seperators that can exibit excellent high-temperature storage stability and capacity retention rate of a lithium secondary battery, a low resistance increase rate, and significantly decreased gas emission are discIodes. In an example embodiment, a separator includes: a porous substrate and a coating layer formed on one or both surfaces of the porous substrate, wherein the coating layer includes inorganic particles, and a water-soluble composite binder including polyethylene oxide and a nitrogen-containing water-soluble polymer.

EP 4 496 059 A2

## Description

## BACKGROUND OF THE INVENTION

### FIELD OF THE INVENTION

The following disclosure relates to a separator and a lithium secondary battery comprising the same.

### DESCRIPTION OF RELATED ART

Recently, a lithium secondary battery has been required to have a large capacity so that it may be applied to electric vehicles, energy storage devices, and the like, and as the capacity of the lithium secondary battery is increased, fire and explosion risks are increased, and thus, various studies are being conducted in order to improve this.

A common lithium secondary battery is manufactured by wrapping or stacking cells formed of a negative electrode, a positive electrode, and a separator disposed between the negative electrode and the positive electrode into a cylinder, inserting the cells into a pouch, and injecting a liquid electrolyte into the pouch. An electrolyte allows charges between electrodes to move well, and generally comprises a nonaqueous organic solvent and a salt.

When a commonly used lithium secondary battery comprising a nonaqueous organic solvent and a salt is stored at a high temperature for a long time, the lithium secondary battery may ignite or explode due to various factors.

As an example, in a lithium secondary battery using a carbonate-based organic solvent, a negative electrode passive film (solid electrolyte interphase (SEI) film), which is a solid electrolyte decomposition product, is formed on the surface of the negative electrode, resulting in decomposition of the carbonate organic solvent to cause gassing inside the secondary battery. Otherwise, an electrolyte sensitively reacts to moisture to cause gassing. The gas may comprise hydrogen gas ($H_2$), carbon monoxide gas (CO), carbon dioxide gas ($CO_2$), methane gas ($CH_4$), hydrogen fluoride, hydrogen sulfide, and the like, depending on the types of nonaqueous organic solvent and negative electrode active material.

Due to the gas generation, the thickness expands during charging, and when a lithium secondary battery is left at a high temperature in a fully charged state to maximum capacity, a side reaction in which an electrolyte reacts with a negative electrode surface may occur, which causes continuous generation gas to increase internal pressure of the lithium secondary battery, and deteriorates performance such as reduced lifespan of the lithium secondary battery at a high temperature due to volume expansion.

Therefore, in order to improve reduced lifespan and performance deterioration, studies on changing components of an electrolyte or changing the type of negative electrode materials continue.

## SUMMARY

An object of the present disclosure is directed to providing a separator which may improve both high temperature storage characteristics and battery life.

Another object of the present disclosure is directed to providing a separator which may significantly decrease gas emission and a lithium secondary battery using the same.

The separator and the lithium secondary battery comprising the same of the present disclosure may be widely applied to the green technology field such as electric vehicles, battery charging stations, and additionally, solar power generations and wind power generations using batteries. In addition, the separator and the lithium secondary battery comprising the same of the present disclosure may be used in eco-friendly electric vehicles, hybrid vehicles, and others for suppressing air pollution and greenhouse gas emission to prevent climate change.

In one general aspect, a separator comprises: a porous substrate and a coating layer on one or both surfaces of the porous substrate, wherein the coating layer comprises a water-soluble composite binder comprising polyethylene oxide and a nitrogen-containing water-soluble polymer, and inorganic particles.

In an example embodiment, the nitrogen-containing water-soluble polymer may comprise any one or two or more selected from the group consisting of polyvinylpyrrolidone, polyvinylpyrrolidone-based copolymers, and polyacrylamide-based resins.

In an example embodiment, the polyacrylamide-based resin may be a copolymer comprising a unit derived from a (meth)acrylamide-based monomer and a unit derived from a comonomer.

In an example embodiment, the polyacrylamide-based resin may comprise (a) a structural unit derived from a (meth)acrylamide-based monomer, (b) a structural unit derived from a hydroxyl group-containing (meth)acryl-based monomer, and (c) a structural unit derived from a polyfunctional (meth)acrylamide-based monomer, but is not limited thereto.

In an example embodiment, the polyacrylamide-based resin may comprise (a) 65 to 96 mol% of the structural unit

derived from a (meth)acrylamide-based monomer, (b) 3 to 34 mol% of the structural unit derived from a hydroxyl group-containing (meth)acryl-based monomer, and (c) 0.001 to 1 mol% of the structural unit derived from a polyfunctional (meth) acrylamide-based monomer, but is not limited thereto.

In an example embodiment, the polyacrylamide-based resin may have a weight average molecular weight of 100,000 to 2,000,000 g/mol, but is not limited thereto.

In an example embodiment, the inorganic particles may comprise any one or more selected from boehmite and barium sulfate.

In an example embodiment, the inorganic particles may further comprise one or two or more types of inorganic particles selected from alumina, silica, aluminum hydroxide, magnesium hydroxide, calcium oxide, magnesium oxide, titanium oxide, aluminum nitrides, $SrTiO_3$, $SnO_2$, $CeO_2$, NiO, ZnO, $ZrO_2$, $Y_2O_3$, SiC, and others, in addition to any one selected from boehmite or barium sulfate or a mixture thereof, but are not limited thereto.

In an example embodiment, the inorganic particles may be include a mixture of two or more types of inorganic particles having different average particle diameters from each other.

In an example embodiment, the inorganic particles may have an average particle diameter of 200 to 1000 nm, but are not limited thereto.

In an example embodiment, the coating layer may have a weight ratio between the inorganic particles and the water-soluble composite binder of 50:50 to 99.9:0.1, but is not limited thereto.

In an example embodiment, the content of the polyethylene oxide may be 1 to 50 wt% of the total content of the water-soluble composite binder, but is not limited thereto.

In an example embodiment, the polyethylene oxide and the nitrogen-containing water-soluble polymer may be comprised at a weight ratio of 10:90 to 90:10, but is not limited thereto.

In an example embodiment, the water-soluble composite binder may further comprise any one or two or more resins selected from the group consisting of polyvinyl acetate, acryl-based resins, polyvinylidene fluoride, polyvinylidene fluoride-hexafluoropropylene copolymer, polyvinylidene fluoride-trichloroethylene copolymer, polyvinylidene fluoride-chlorotrifluoroethylene copolymer, polymethylmethacrylate, polyacrylonitrile, ethylene vinyl acetate copolymer, carboxymethyl cellulose, polyimide, and others, but is not limited thereto.

In an example embodiment, the coating layer may have a thickness of 0.1 to 50% of the total thickness of the separator, but is not limited thereto.

In an example embodiment, the coating layer may be formed with a loading of 0.5 to 10 $g/m^2$, but is not limited thereto.

In an example embodiment, the porous substrate may be any one or a lamination of two or more selected from the group consisting of a porous film, a nonwoven fabric, and a woven fabric, but is not limited thereto.

In an example embodiment, the porous substrate may have a thickness of 1 to 80 $\mu m$, but is not limited thereto.

In another general aspect, a lithium secondary battery comprises the separator according to an example embodiment.

Other features and aspects will be apparent from the following detailed description, the drawings, and the claims.

## DETAILED DESCRIPTION OF EMBODIMENTS

Hereinafter, the present disclosure will be described in detail. However, it is only illustrative and the present disclosure is not limited to the specific embodiments which are illustratively described in the present disclosure.

In addition, unless otherwise defined, all technical terms and scientific terms have the same meanings as those commonly understood by a person skilled in the art to which the present disclosure pertains. The terms used herein are only for effectively describing a certain specific example, and are not intended to limit the present disclosure.

In addition, the singular form used in the specification and claims appended thereto may be intended to comprise a plural form also, unless otherwise indicated in the context.

In addition, unless particularly described to the contrary, "comprising" any elements will be understood to imply further inclusion of other elements rather than the exclusion of any other elements.

In addition, unless particularly defined, when a layer or member is positioned "on" another layer or member, not only the layer or member is in contact with another layer or member, but also another layer or member exists between two layers or two members.

In addition, when unique manufacture and material allowable errors are suggested in the mentioned meaning, "about", "substantially", and the like are used in the meaning of the numerical value or in the meaning close to the numerical value, and are used to prevent the disclosure mentioning a correct or absolute numerical value for better understanding of the present disclosure from being unfairly used by an unconscionable infringer.

In the present disclosure, an average particle diameter refers to "$D_{50}$". "$D_{50}$" refers to a particle diameter of an inorganic particle corresponding to 50% in terms of a volume-based integrated fraction. $D_{50}$ may be derived from particle size distribution results obtained by collecting a sample of inorganic particles which are a subject to be measured in

accordance with the standard of KS A ISO 13320-1 and performing analysis using Multisizer 4e Coulter counter available from Beckman Coulter.

In the present disclosure, a glass transition temperature (Tg) refers to a temperature range in which glass transition occurs, and refers to a value measured using a dilatometer or a differential scanning calorimeter (DSC).

Unless otherwise particularly defined in the present disclosure, weight average molecular weight (Mw), number average molecular weight (Mn), and viscosity average molecular weight (Mv) may be measured by a method known in the art, and may be, for example, a molecular weight in terms of polyethylene glycol analyzed with gel permeation chromatography (GPC). Specifically, Measurement the molecular weight was performed using GPC (EcoSEC HLC-8320 GPC Reflective Index detector from Tosoh Corporation), TSKgel guard PWx, two columns of TSKgel GMPWxl and TSKgel G2500PWxl (7.8×300 mm) was used as a GPC column, a 0.1 M aqueous $NaNO_3$ solution was used as a solvent, polyethylene glycol was used as a standard, and analysis was performed at 40°C at a flow rate of 1 mL/min.

In the present disclosure, "as a main component" refers to being used as a main component as compared with other components, for example, used at 50 wt% or more, more specifically 55 wt% or more, 60 wt% or more, 65 wt% or more, 70 wt% or more, 75 wt% or more, 80 wt% or more, 90 wt% or more, or 99 wt% or more.

According to an example embodiment of the present disclosure, a separator having excellent heat resistance, adhesive strength, and air permeability may be provided by forming a coating layer formed from a composition combined with a specific binder, and when the separator is used, a lithium secondary battery having improved high temperature storage characteristics and long-term life characteristics may be provided.

In addition, according to an example embodiment of the present disclosure, since a specific binder is combined and a coating layer is formed thereon using a composition combined with specific inorganic particles, a lithium secondary battery having significantly decreased gas emission may be provided. Without being limited, when the separator is applied to a lithium secondary battery using an electrolyte comprising $LiPF_6$ as an electrolyte, gas emission may be significantly decreased, but the type of electrolyte is not limited thereto.

example embodimentThe present disclosure includes a separator comprising: a porous substrate and a coating layer formed on one or both surfaces of the porous substrate, wherein the coating layer comprises inorganic particles, and a water-soluble composite binder comprising polyethylene oxide and a nitrogen-containing water-soluble polymer.

A first embodiment of the separator according to the present disclosure is a separator comprising a porous substrate and a coating layer formed on one or both surfaces of the porous substrate, wherein the coating layer comprises a water-soluble composite binder comprising polyethylene oxide and a nitrogen-containing water-soluble polymer; and boehmite particles.

A second embodiment is a separator comprising a porous substrate and a coating layer formed on one or both surfaces of the porous substrate, wherein the coating layer comprises a water-soluble composite binder comprising polyethylene oxide and a nitrogen-containing water-soluble polymer; and barium sulfate particles.

A third embodiment is a separator comprising a porous substrate and a coating layer formed on one or both surfaces of the porous substrate, wherein the coating layer comprises a water-soluble composite binder comprising polyethylene oxide and a nitrogen-containing water-soluble polymer; and boehmite particles and barium sulfate particles.

A fourth embodiment is a separator comprising a porous substrate and a coating layer formed on one or both surfaces of the porous substrate, wherein the coating layer comprises a water-soluble composite binder comprising polyethylene oxide and a nitrogen-containing water-soluble polymer; and any one selected from boehmite particles and barium sulfate particles or mixed particles thereof, and inorganic particles other than that.

A fifth embodiment is a separator comprising a porous substrate and a coating layer formed on one or both surfaces of the porous substrate, wherein the coating layer comprises a water-soluble composite binder comprising polyethylene oxide and a nitrogen-containing water-soluble polymer; and any one selected from boehmite particles and barium sulfate particles or mixed particles thereof, and the boehmite particles and the barium sulfate particles may be a mixture of two or more types of particles having different average particle diameters independently of each other.

The first to fifth embodiments are only illustrated for describing an embodiment of the present disclosure, and the present disclosure is not limited thereto. In addition, another layer may be further comprised between the porous substrate and the coating layer, and the type of layer which is further comprised is not particularly limited. In addition, the coating layer may be a lamination of two or more different types of coating layers, but is not limited thereto.

Hereinafter, each constituent element of the present disclosure will be described in more detail.

[Porous substrate]

In an example embodiment, the porous substrate is commonly used in the art, and may be a woven fabric, a nonwoven fabric, a porous film, or a lamination of any one or two or more selected therefrom, but is not limited thereto.

The material of the porous substrate is not limited, but, for example, polyolefins such as polyethylene and polypropylene, polyesters such as polyethylene terephthalate and polybutylene terephthalate, polyacetal, polyamide, polyimide, polycarbonate, polyether ether ketone, polyarylether ketone, polyetherimide, polyamideimide, polybenzimidazole, polyethersulfone, polyphenylene oxide, cyclic olefin copolymers, polyphenylene sulfide, polyethylene naphthalate, glass fiber, Teflon, polytetrafluoroethylene, and others may be used, and the material may be formed of any one or two or more resins selected from the group consisting thereof.

As an example, the porous substrate may be a polyolefin-based porous substrate which may be adjusted for micronization of pores, but is not limited thereto. The polyolefin-based porous substrate may be manufactured in the form of a film and is not limited as long as it is usually used as a separator of a lithium secondary battery, and an example thereof comprises polyethylene, polypropylene, copolymers thereof, and others, but is not necessarily limited thereto.

The thickness of the porous substrate is not particularly limited, but may be 100 μm or less, 90 um or less, in particular 80 um or less and 1 μm or more, 5 μm or more, or any value between the numerical values, and for example, 1 to 80 μm, 1 to 70 μm, 5 to 50 um, or 5 to 30 um, in terms of increasing the capacity of the lithium secondary battery at the same volume. The thickness of the porous substrate may be measured in the following: After stacking the porous substrate in 10 layers, measure the thickness with a Mitutoyo thickness gauge at 5 random points in the width direction, then derive the average thickness of the 10-layer porous substrate, and then divide by 10 to derive the overall average thickness of the single porous substrate.

[Coating layer]

The separator of the present disclosure comprises a coating layer on one or both surfaces of the porous substrate.

In an example embodiment, the coating layer may be coated so that it corresponds to 50% or more, 60% or more, 70% or more, 80% or more, 90% or more, or 100% of the area of the porous substrate.

Though the thickness of the coating layer is not particularly limited, it may be formed in a range of 0.1 to 50%, 0.5 to 45%, or 1 to 40% of the total thickness of the separator. For example, when the coating layer is formed on one or both surfaces, each coating thickness may be 0.01 to 10 μm, 0.1 to 10 μm, 0.3 to 8 μm, 0.3 to 5 um, or 1 to 4 um, but is not limited thereto. The thickness of the coating layer may be measured in the following: The thickness of the coating layer was derived by subtracting the average thickness of the single porous substrate from the average thickness of the single separator.

The weight per unit area of the coating layer (i.e. loading) may be 0.5 to 100 g/m$^2$, 0.5 to 50 g/m$^2$, 0.5 to 10 g/m$^2$, 0.5 to 8 g/m$^2$, or 0.5 to 5 g/m$^2$, but is not necessarily limited thereto.

In an example embodiment, the coating layer may be formed from inorganic particles and a water-soluble composite binder, and as the inorganic particles are connected to each other, pores may be formed between the inorganic particles.

Without being limited, the coating layer may have the contents of the inorganic particles and the water-soluble composite binder at a weight ratio of 50:50 to 99.9:0.1, 80:20 to 99.9:0.1, 90:10 to 99:1, or 95:5 to 99:1. Within the range, a separator which has smooth lithium ion movement and simultaneously expresses heat resistance and has a low heat shrinkage rate may be provided, which is thus preferred, but is not limited thereto.

In an example embodiment, the content ratio of inorganic particles to binder may be 80:20 to 99.5:0.5, 90:10 to 99.5:0.5, or 95:5 to 99.5:0.5.

In an example embodiment, the content ratio of binder to PEO may be 1:1 to 10:1, 1:1 to 5:1, 1:1 to 3:1, or about 2:1.

In an example embodiment, the coating layer may be formed by applying a slurry composition comprising the inorganic particles and the water-soluble composite binder. For example, the coating layer may comprise the inorganic particles, the water-soluble composite binder, and a solvent, and may have a solid content of 5 to 50 wt%, 5 to 45 wt%, or 5 to 40 wt%, but is not limited thereto.

In an example embodiment, the water-soluble composite binder may serve to bind the inorganic particles to each other and bind the inorganic particles to the porous substrate, and also, may serve to significantly decrease gas emission while also satisfying the high temperature storage characteristics and long-term life characteristics of the lithium secondary battery as intended in the present disclosure.

example embodimentSpecifically, since the water-soluble composite binder comprises both polyethylene oxide and the nitrogen-containing water-soluble polymer, the effect may be achieved. When only any one of them is comprised, it may be difficult to satisfy both the high temperature storage characteristics and the long-term life characteristics.

In addition, if necessary, a heat resistant binder or a water-dispersible binder which is commonly used in the art may be further comprised, and specifically, for example, the water-soluble composite binder may comprise polyethylene oxide and the nitrogen-containing water-soluble polymer as main components. "Comprised as a main component" means using a combined content of polyethylene oxide and the nitrogen-containing water-soluble polymer of 50 wt% or more, 60 wt% or more, 70 wt% or more, 80 wt% or more, 90 wt% or more, 100 wt%, or any range between the numerical values, with respect to the total content of the water-soluble composite binder. For example, the water-soluble composite binder may comprise 80 to 100 wt%, 85 to 100 wt%, 90 to 100 wt%, 95 to 100 wt%, or 98 to 100 wt% of polyethylene oxide and the

nitrogen-containing water-soluble polymer.

The heat resistant binder or the water-dispersible binder which may be further added may be used without limitation as long as it is commonly used for binding the inorganic particles in the separator. For example, any one or two or more resins selected from the group consisting of polyvinyl acetate, acryl-based resins, polyvinylidene fluoride, polyvinylidene fluoride-hexafluoropropylene copolymer, polyvinylidene fluoride-trichloroethylene copolymer, polyvinylidene fluoride-chlorotrifluoroethylene copolymer, polymethylmethacrylate, polyacrylonitrile, ethylene vinyl acetate copolymer, carboxymethyl cellulose, polyimide, and othersmay be comprised.

In an example embodiment, the polyethylene oxide is a polymer comprising an ethylene oxide structure as a repeating unit, and may also be polyethylene oxide which is modified to introduce a functional group to the end. As an example, any one or two or more functional groups selected from the group consisting of -H, -OH, -OR (wherein R is a C1-C20 alkyl group), -COOH (acetate group), $-NR_2$ (amine group, wherein R is hydrogen or a C1-C20 alkyl group), and othersmay be introduced to both end groups or one end group of the polyethylene oxide, but the present disclosure is not limited thereto.

Without being limited, the polyethylene oxide may have a viscosity average molecular weight (Mv) of 100,000 to 1,000,000 g/mol, 200,000 to 900,000 g/mol, or 200,000 to 700,000 g/mol. Within the range, the intended effect may be favorably achieved, but the present disclosure is not limited thereto. The viscosity average molecular weight may be measured by gel permeation chromatography (GPC), using polyethylene glycol as a standard material.

It may be favorable that the content of the polyethylene oxide is 50 wt% or less, for example, 1 to 50 wt%, 1 to 45 wt%, 1 to 40 wt%, or 1 to 35 wt% of the total content of the water-soluble composite binder for achieving the intended effect, but the present disclosure is not limited thereto.

In an example embodiment, the polyethylene oxide and the nitrogen-containing water-soluble polymer may be used at a weight ratio of 10:90 to 90:10, 10:90 to 50:50, 10:90 to 40:60, but the present disclosure is not limited thereto.

In an example embodiment, the nitrogen-containing water-soluble polymer may comprise any one or two or more selected from the group consisting of polyvinylpyrrolidone, polyvinylpyrrolidone-based copolymers, and polyacrylamide-based resins.

In an example embodiment, the nitrogen-containing water-soluble polymer may comprise a polyacrylamide-based resin, or may be a mixture of the polyacrylamide-based resin and any one or more selected from polyvinylpyrrolidone and a polyvinylpyrrolidone-based copolymer. In an example embodiment, when the polyacrylamide-based resin and any one or more selected from polyvinylpyrrolidone and a polyvinylpyrrolidone-based copolymer are mixed as the nitrogen-containing water-soluble polymer, the polyacrylamide-based resin may have a content as the main component. That is, the polyacrylamide-based resin may be used at a content of 50 wt% or more, for example, 50 to 99.9 wt% of the nitrogen-containing water-soluble polymer.

Without being limited, the polyvinylpyrrolidone may have a weight average molecular weight (Mw) of, for example, 10,000 to 1,000,000 g/mol, 20,000 to 900,000 g/mol, 30,000 to 700,000 g/mol, or 40,000 500,000 g/mol. Within the range, the intended effect may be favorably achieved, but the present disclosure is not limited thereto.

The polyvinylpyrrolidone-based copolymer comprises a unit derived from N-vinyl-2-pyrrolidone and a unit derived from a comonomer, and the comonomer may be any one or a mixture of two or more selected from the group consisting of aromatic vinyl-based monomers; vinyl cyanide-based monomers; aromatic (meth)acrylate having an aryl group, an alkylaryl group, or an arylalkyl group having 6 to 20 carbon atoms; hydroxyl group-containing (meth)acrylate; epoxy group-containing (meth)acrylate; unsaturated carboxylic acid; and others, but is not limited thereto.

For example, the comonomer may be any one or a mixture of two or more selected from the group consisting of aromatic vinyl-based monomers comprising styrene, p-methylstyrene, m-methylstyrene, p-ethylstyrene, m-ethylstyrene, p-chlorostyrene, m-chlorostyrene, p-chloromethylstyrene, m-chloromethylstyrene, vinyl toluene, vinyl naphthalene, and others; vinyl cyanide-based monomers comprising acrylonitrie, methacrylonitrile, and others; aromatic (meth)acrylate having an aryl group, an alkylaryl group, or an arylalkyl group having 6 to 20 carbon atoms such as phenyl (meth)acrylate, benzyl (meth)acrylate, 2-phenylethyl (meth)acrylate, 3-phenylpropyl (meth)acrylate, 4-phenylbutyl (meth)acrylate, 2-2-methylphenylethyl (meth)acrylate, 2-3-methylphenylethyl (meth)acrylate, and 2-4-methylphenylethyl (meth)acrylate; hydroxyl group-containing (meth)acrylate such as 2-hydroxyethyl(meth)acrylate, 4-hydroxybutyl(meth)acrylate, 2-hydroxypropyl(meth)acrylate, 2-hydroxybutyl(meth)acrylate, 6-hydroxyhexyl(meth)acrylate, and 1,4-cyclohexanedimethanol mono(meth)acrylate; epoxy group-containing (meth)acrylate such as glycidyl acrylate and glycidyl methacrylate; unsaturated carboxylic acid such as acrylic acid and methacrylic acid; vinyl acetate; and others, but is not limited thereto.

In addition, the polyvinylpyrrolidone-based copolymer may be a polyvinylpyrrolidone-polyvinyl acetate block copolymer, but is not limited thereto.

Without being limited, the polyvinylpyrrolidone-based copolymer may have a weight average molecular weight (Mw) of, for example, 10,000 to 1,000,000 g/mol, 50,000 to 900,000 g/mol, or 50,000 to 500,000 g/mol. Within the range, the intended effect may be favorably achieved, but the present disclosure is not limited thereto.

In an example embodiment, the polyacrylamide-based resin may be a copolymer comprising a structural unit derived from a (meth)acrylamide-based monomer.

For example, it may be a copolymer of a (meth)acrylamide-based monomer and a comonomer, and an example of the comonomer may be any one or two or more selected from (meth)acrylic acid, a hydroxyl group-containing (meth)acryl-based monomer, a polyfunctional (meth)acrylamide-based monomer, and others, but is not limited thereto.

In an example embodiment, the polyacrylamide-based resin may comprise (a) a structural unit derived from a (meth)acrylamide-based monomer, (b) a structural unit derived from a hydroxyl group-containing (meth)acryl-based monomer, and (c) a structural unit derived from a polyfunctional (meth)acrylamide-based monomer. The (meth)acryl refers to acryl and/or methacryl.

The polyacrylamide-based resin uses the ternary copolymer rather than a homopolymer derived from an acrylamide-based monomer, thereby further decreasing high-temperature shrinkage and imparting high-temperature stability to provide a separator having better heat resistance. In addition, a separator having better miscibility with the polyethylene oxide, better adhesion to the porous substrate, decreased air permeability due to its use together with the polyethylene oxide, smoother lithium ion movement, and a better gas reduction effect may be provided. In addition, high-temperature storage stability and high-temperature capacity retention rate of the lithium secondary battery may be greatly improved.

In an example embodiment, the polyacrylamide-based resin may comprise (a) 65 to 96 mol% of the structural unit derived from a (meth)acrylamide-based monomer, (b) 3 to 34 mol% of the structural unit derived from a hydroxyl group-containing (meth)acryl-based monomer, and (c) 0.001 to 1 mol% of the structural unit derived from a polyfunctional (meth)acrylamide-based monomer.

(a) The (meth)acrylamide-based monomer polymerization unit of the polyacrylamide-based resin may be represented by the following Chemical Formula 1:

[Chemical Formula 1]

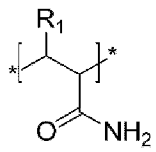

wherein $R_1$ is hydrogen or a C1 to C6 alkyl group.

(b) The hydroxyl group-containing (meth)acryl-based monomer polymerization unit of the polyacrylamide-based resin may be represented by the following Chemical Formula 2:

[Chemical Formula 2]

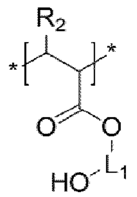

wherein $R_2$ is hydrogen or a C1 to C6 alkyl group. In addition, $L_1$ is a linear or branched C1 to C6 alkylene group.

(c) The polyfunctional (meth)acrylamide-based monomer polymerization unit may be produced by polymerizing a polyfunctional monomer represented by the following Chemical Formula 3:

[Chemical Formula 3]

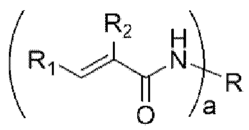

wherein $R_1$ and $R_2$ are independently of each other hydrogen or a C1 to C6 alkyl group, R is a linear or branched C1 to C10 hydrocarbon group, and a is 2 to 6.

As an example, (a) the (meth)acrylamide-based monomer may be 65 to 96 mol%, 66 to 95 mol%, 67 to 94 mol%, 68 to 93 mol%, or 70.5 mol% to 91.5 mol%. (b) The hydroxyl group-containing (meth)acrylamide-based monomer may be 3 to 34 mol%, 4 to 33 mol%, 5 to 32 mol%, 6 to 31 mol%, or 8 to 29 mol%. (c) The polyfunctional (meth)acrylamide-based monomer may be comprised in the binder at 0.001 to 1 mol%, 0.005 to 0.9 mol%, or 0.01 to 0.5 mol%.

As an example, the polyacrylamide-based resin may be a crosslinked copolymer of acrylamide, hydroxyethyl acrylate, and N-methylenebisacrylamide, but is not limited thereto.

The polyacrylamide-based resin may have a weight average molecular weight of 100,000 g/mol or more, 150,000 g/mol or more, 200,000 g/mol or more, 250,000 g/mol or more and 2,000,000 g/mol or less, 1,500,000 g/mol or less, 1,000,000 g/mol or less, or any value between the numerical values. For example, the weight average molecular weight may be 100,000 to 2,000,000 g/mol, and within the range, adhesive strength to the porous substrate is better, a heat shrinkage rate may be further lowered, and high-temperature storage stability and capacity retention rate of the lithium secondary battery may be further improved, which is thus preferred, but the present disclosure is not limited thereto. The weight average molecular weight is an average molecular weight in terms of polyethylene glycol as measured using gel permeation chromatography (GPC).

The viscosity of an aqueous solution of the polyacrylamide-based resin having a solid content of 10 wt% may be 3000 cps or less, 2500 cps or less, 2000 cps or less, or 1500 cps or less, but is not limited thereto. Within the range, when a slurry is prepared by mixing polyethylene oxide and inorganic particles, the viscosity of the slurry may be further lowered, and applicability may be further improved, which is thus preferred.

In an example embodiment, a solvent used in a slurry composition prepared for forming the coating layer may be, for example, prepared as an aqueous solution using water, and, if necessary, may be used by further adding a solvent such as acetone, tetrahydrofuran, dimethylformamide, and N-methyl-2-pyrrolidone.

In an example embodiment, the inorganic particles are electrochemically stable, and any inorganic particles may be used without limitation as long as they are usually used for improving heat resistance and a heat shrinkage.

In an example embodiment, the inorganic particles may be any one or a mixture thereof selected from boehmite and barium sulfate, and may achieve excellent air permeability and gas reduction effect better when mixed with the water-soluble composite binder described above, by essentially comprising them. In addition, high-temperature storage stability and capacity retention rate of the lithium secondary battery may be achieved. In addition, if necessary, the inorganic particles comprise the boehmite, the barium sulfate, or the mixture thereof as a main component and may further comprise other inorganic particles. That is, the boehmite, the barium sulfate, or the mixture thereof may be used at 50 wt% or more, 60 wt% or more, 70 wt% or more, 80 wt% or more, 90 wt% or more, 95 wt% or more, 99 wt% or more and 100 wt% or less of the content of the inorganic particles, and may be used at any numerical value between the numerical values.

The inorganic particles which may be further added may be any inorganic particles commonly used in the art without limitation, and for example, may be one or two or more types of inorganic particles selected from alumina, silica, aluminum hydroxide, calcium oxide, magnesium hydroxide, magnesium oxide, titanium oxide, aluminum nitrides, $SrTiO_3$, $SnO_2$, $CeO_2$, NiO, ZnO, $ZrO_2$, $Y_2O_3$, SiC, clay, and others.

Though the size of the inorganic particles is not limited, an average particle diameter may be, for example, 50 nm or more, 100 nm or more, 200 nm or more, 300 nm or more and 1500 nm or less, 1000 nm or less, 800 nm or less, or in any range between the numerical values, for imparting smooth coating and excellent electrical properties. For example, it may be in a range of 100 to 1500 nm, 200 to 1000 nm, or 300 to 800 nm. The shape of the inorganic particles is not limited, and may be spherical, oval, needle-shaped, and others.

In an example embodiment, the inorganic particles used with the water-soluble composite binder may be boehmite, barium sulfate, or a mixture thereof, and the boehmite and the barium sulfate may be a mixture of two or more having different average particle diameters. That is, two or more particles having different average particle diameters may be mixed and used. For example, two or more boehmites having different average particle diameters, two or more barium sulfate having different average particle diameters, or boehmite and barium sulfate having different average particle diameters may be used.

For example, when two or more inorganic particles having different average particle diameters are used, first inorganic particles having a larger average particle diameter and second inorganic particles having a smaller average particle diameter may be mixed and used, and the average particle diameter of the first inorganic particles may be 200 to 500 nm, the average particle diameter of the second inorganic particles may be 500 to 1000 nm, and a difference in the average particle diameter between the first inorganic particles and the second inorganic particles may be 100 nm or more, for example, 100 to 500 nm. The first inorganic particles and the second inorganic particles may be independently of each other boehmite and barium sulfate.

In an example embodiment, after the inorganic particles, the water-soluble composite binder, and the solvent are mixed to prepare a slurry composition, inorganic particles may be sufficiently crushed using a ball mill and the like to pulverize aggregates.

A method of coating the slurry composition on the porous substrate is not particularly limited, but the composition may be coated on one or both surfaces of the porous substrate by various methods such as roll coating, spin coating, dip

coating, bar coating, die coating, slit coating, and ink-jet printing without limitation.

The separator according to an example embodiment of the present disclosure may show an amount of change in air permeability (△G) as represented by the following Equation 1:

[Equation 1]

$$\triangle G = G_1 - G_2 \leq 50$$

wherein $G_1$ is a Gurley permeability of a separator comprising the coating layer, $G_2$ is a Gurley permeability of the porous substrate itself, and the Gurley permeability is measured in accordance with ASTM D726 and has a unit of sec/100 cc.

In Equation 1, △G may be 50 sec/100 cc or less, 1 to 45 sec/100 cc, or 5 to 40 sec/100 cc. Within the range, the change amount in air permeability is significantly small and the air permeability of the binder may be better.

The separator according to an example embodiment of the present disclosure may have a high-temperature shrinkage of 5% or less, 4% or less, 3% or less and 0.1% or more, 1% or more, or any value between the numerical values described above in both the machine direction and the transverse direction, as measured when the separator was allowed to stand in a hot air drying oven at 130°C for 60 minutes. For example, the high-temperature shrinkage may be 1 to 5%. When the range is satisfied, a separator which has excellent heat resistance to have thermal stability may be provided. In addition, when the range is satisfied, the gas reduction effect and high-temperature stability of the lithium secondary battery may be excellent.

In addition, the separator according to an example embodiment of the present disclosure has excellent adhesive strength between the inorganic particles and the porous substrate and may provide an effect of significantly small detachment of the inorganic particles.

[Lithium secondary battery]

The lithium secondary battery according to an example embodiment of the present disclosure may comprise the separator of an example embodiment described above between a positive electrode and a negative electrode. Herein, the positive electrode and the negative electrode may be used without limitation as long as they are commonly used in the lithium secondary battery.

Without being limited, the lithium secondary battery may comprise an electrolyte, for example, a liquid electrolyte, and the liquid electrolyte may comprise a dissociable lithium salt commonly used in the art and a nonaqueous solvent. Though the type of lithium salt is not limited, when the separator of the present disclosure is applied, gas emission may be significantly decreased, particularly in an electrolyte comprising $LiPF_6$. However, the present disclosure is not limited thereto and any commonly used electrolyte may be applied.

Hereinafter, the examples of the present disclosure will be further described with reference to the specific experimental examples. It is apparent to those skilled in the art that the examples and the comparative examples comprised in the experimental examples only illustrate the present disclosure and do not limit the appended claims, and various modifications and alterations of the examples may be made within the range of the scope and spirit of the present disclosure, and these modifications and alterations will fall within the appended claims.

The physical properties were evaluated as follows.

[Weight average molecular weight]

Measurement was performed using GPC (EcoSEC HLC-8320 GPC Reflective Index detector from Tosoh Corporation), TSKgel guard PWx, two columns of TSKgel GMPWxl and TSKgel G2500PWxl (7.8×300 mm) was used as a GPC column, a 0.1 M aqueous $NaNO_3$ solution was used as a solvent, polyethylene glycol was used as a standard, and analysis was performed at 40°C at a flow rate of 1 mL/min.

[Evaluation of heat shrinkage rate]

A separator was cut into a square shape with a side of 10 cm and a transverse direction (TD) and a machine direction (MD) were indicated. A sample was placed in the center, 5 sheets of paper were placed on and under the sample, respectively, and the four sides of the paper were wrapped with tape. The sample wrapped in paper was allowed to stand in a hot air drying oven at 130°C for 60 minutes. Thereafter, the sample was taken out, the separator was measured with a camera, and a shrinkage rate in the machine direction (MD) and a shrinkage rate in the transverse direction (TD) were calculated using the following equation:

High-temperature shrinkage rate in machine direction (%) = (length in machine direction before heating - length in machine direction after heating) / length in machine direction before heating × 100

High-temperature shrinkage rate in transverse direction (%) = (length in transverse direction before heating - length in transverse direction after heating) / length in transverse direction before heating × 100

[Gurley permeability]

As a gas permeability, a Gurley permeability was measured. It was measured according to the standard of ASTM D726, using Densometer available from Toyoseiki. A time it took for 100 cc of air to pass a separator having an area of 1 $in^2$ was recorded in seconds and compared. The unit was sec/100 cc.

[Adhesive strength test of strawboard]

A separator was cut into a size of 50 mm×50 mm, and was placed on a rubber pad with an inorganic layer placed underneath. A black strawboard (20 mm×50 mm×T 0.25 mm) was placed between the separator and a rubber pad, and a constant pressure (10 $g/cm^2$) was applied using a presser. The black strawboard was forcefully pulled aside, and a degree of an inorganic material adhered on the surface was confirmed and was identified as A/B/C depending on the adhered degree, considering the following grade:

A: no adhesion
B: inorganic material adhered in a small amount
C: binder and inorganic material adhered together

[Thickness]

Separator: After stacking the separator in 10 layers, measure the thickness with a Mitutoyo thickness gauge at 5 random points in the width direction, then derive the average thickness of the 10-layer separator, and then divide by 10 to derive the overall average thickness of the single separator.
Porous substrate: After stacking the porous substrate in 10 layers, measure the thickness with a Mitutoyo thickness gauge at 5 random points in the width direction, then derive the average thickness of the 10-layer porous substrate, and then divide by 10 to derive the overall average thickness of the single porous substrate.
Coating layer: The thickness of the coating layer was derived by subtracting the average thickness of the single porous substrate from the average thickness of the single separator obtained in the manner described above.

[Example 1]

<Preparation of slurry composition>

97 wt% of boehmite (γ-AlO(OH)) having an average particle diameter of 600 nm, 2 wt% of a polyacrylamide-based resin (crosslinked copolymer of acrylamide, hydroxyethylacrylate, and N-methylenebisacrylamide, indicated as "PAM1" in Table 1, average particle diameter: 270,000 g/mol), and 1 wt% of polyethylene oxide (PEO, Mv = 300,000 g/mol, CAs No: 25322-68-3, available from Sigma-Aldrich) were added to water as a solvent and stirred to prepare a slurry composition having a solid content concentration of 30 wt%.

<Manufacture of separator>

A separator substrate (ENPASS, SK IE Technology Co., Ltd.) having a width of 150 mm, a length of 1000 M, and a thickness of 9 um was used. The slurry composition prepared above was bar-coated on both surface of the substrate at a speed of 3 m/min to form a coating layer.
Thereafter, the substrate was dried by passing through a hot air drier at 40°C wound in a roll shape. The thickness of the coated separator measured after the winding was a total of 13 um and the thickness of the coating layer was 2 um per one surface.
The physical properties of the manufactured separator were evaluated, and are shown in the following Table 1.

<Manufacture of lithium secondary battery>

95 wt% of artificial graphite as a negative electrode active material, 3 wt% of acrylic latex having Tg of -52°C (solid content of 20 wt%) as a fusing agent, and 2 wt% of carboxymethyl cellulose (CMC) as a thickener were added to water and stirring was performed to prepare a uniform negative electrode slurry. The slurry was coated on a copper foil having a thickness of 20 μm, dried, and pressed to manufacture a negative electrode plate having a thickness of 150 μm.

94 wt% of $LiCoO_2$ as a positive electrode active material, 2.5 wt% of polyvinylidene fluoride as a fusing agent, and 3.5 wt% of carbon black as a conductive agent were added to N-methyl-2-pyrrolidone (NMP) as a solvent and stirring was performed to prepare a uniform positive electrode slurry. The slurry was coated on an aluminum foil having a thickness of 30 μm, dried, and pressed to manufacture a positive electrode plate having a thickness of 150 um.

A separator was disposed between the positive electrode and the negative electrode to manufacture a battery in a pouch form. An electrolyte solution to which ethylene carbonate (EC)/ ethyl methyl carbonate (EMC)/ dimethyl carbonate (DMC) = 25:45:20 (volume ratio) in which 1 M lithium hexafluorophosphate ($LiPF_6$) was dissolved was added was injected into an assembled battery. In order to seal the opening aluminum packaging, the opening of aluminum exterior was closed by heat sealing at 165°C, thereby manufacturing a pouch-type lithium secondary battery of 2 Ah. The physical properties of the manufactured batteries were evaluated, and are shown in Table 2.

[Example 2]

A slurry composition was prepared in the same manner as in Example 1, except that barium sulfate having an average particle diameter of 500 nm was used instead of boehmite as inorganic particles.

That is, 97 wt% of barium sulfate having an average particle diameter of 500 nm, 2 wt% of the polyacrylamide-based resin (indicated as "PAM1" in Table 1), and 1 wt% of polyethylene oxide (PEO, Mv = 300,000 g/mol, CAS No: 25322-68-3, available from Sigma-Aldrich) were added to water as a solvent and stirred to prepare a slurry composition having a solid content concentration of 30 wt%.

The physical properties of the manufactured separator and battery were evaluated and are shown in Tables 1 and 2.

[Example 3]

A slurry composition was prepared in the same manner as in Example 1, except that boehmite and barium sulfate were mixed and used as inorganic particles.

That is, 50 wt% of boehmite (γ-AlO(OH)) having an average particle diameter of 600 nm, 47 wt% of barium sulfate having an average particle diameter of 500 nm, 2 wt% of the polyacrylamide-based resin (indicated as "PAM1" in Table 1), and 1 wt% of polyethylene oxide (PEO, Mv = 300,000 g/mol, CAS No: 25322-68-3, available from Sigma-Aldrich) were added to water as a solvent and stirred to prepare a slurry composition having a solid content concentration of 30 wt%.

The physical properties of the manufactured separator and battery were evaluated and are shown in Tables 1 and 2.

[Example 4]

A slurry composition was prepared in the same manner as in Example 1, except that two types of boehmites having different average particle diameters were used.

That is, 77 wt% of boehmite (γ-AlO(OH)) having an average particle diameter of 600 nm, 20 wt% of boehmite having an average particle diameter of 300 nm, 2 wt% of the polyacrylamide-based resin (indicated as "PAM1" in Table 1), and 1 wt% of polyethylene oxide (PEO, Mv = 300,000 g/mol, CAS No: 25322-68-3, available from Sigma-Aldrich) were added to water as a solvent and stirred to prepare a slurry composition having a solid content concentration of 30 wt%.

The physical properties of the manufactured separator and battery were evaluated and are shown in Tables 1 and 2.

[Example 5]

A slurry composition was prepared in the same manner as in Example 1, except that two types of barium sulfates having different average particle diameters were used.

That is, 50 wt% of barium sulfate having an average particle diameter of 800 nm, 47 wt% of barium sulfate having an average particle diameter of 500 nm, 2 wt% of the polyacrylamide-based resin (indicated as "PAM1" in Table 1), and 1 wt% of polyethylene oxide (PEO, Mv = 300,000 g/mol, CAS No: 25322-68-3, available from Sigma-Aldrich) were added to water as a solvent and stirred to prepare a slurry composition having a solid content concentration of 30 wt%.

The physical properties of the manufactured separator and battery were evaluated and are shown in Tables 1 and 2.

[Example 6]

A slurry composition was prepared in the same manner as in Example 1, except that a polyacrylamide-based resin (indicated as "PAM2" in the table, a copolymer of acrylic acid and acrylamide, weight average molecular weight: 100,000 g/mol) was used instead of the polyacrylamide-based resin (PAM1).
The physical properties of the manufactured separator and battery were evaluated and are shown in Tables 1 and 2.

[Example 7]

A slurry composition was prepared in the same manner as in Example 1, except that polyvinylpyrrolidone (PVP, available from Sigma-Aldrich, CAS Number: 9003-39-8) was used instead of a polyacrylamide-based resin (PAM1).
The physical properties of the manufactured separator and battery were evaluated and are shown in Tables 1 and 2.

[Example 8]

A slurry composition was prepared in the same manner as in Example 1, except that polyvinylpyrrolidone available from Sigma-Aldrich, CAS Number: 9003-39-8) was further used.
That is, 97 wt% of boehmite (γ-AlO(OH)) having an average particle diameter of 600 nm, 1.5 wt% of a polyacrylamide-based resin ("PAM1"), 0.5 wt% of polyvinylpyrrolidone (PVP, available from Sigma-Aldrich, CAS Number: 9003-39-8), and 1 wt% of polyethylene oxide (PEO, Mv = 300,000 g/mol, CAS No: 25322-68-3, available from Sigma-Aldrich) were added to water as a solvent and stirred to prepare a slurry composition having a solid content concentration of 30 wt%.
The physical properties of the manufactured separator and battery were evaluated and are shown in Tables 1 and 2.

[Comparative Example 1]

A slurry composition was prepared in the same manner as in Example 1, except that a water dispersible acryl-based binder (comprising 2 wt% of polyvinyl alcohol having a melting temperature of 220°C and a saponification degree of 99%, Tg: -52°C) having a latex content of 20 wt% was used alone as a binder.
That is, 97 wt% of boehmite (γ-AlO(OH)) having an average particle diameter of 600 nm and 3 wt% of the acryl-based binder were added to water as a solvent and stirred to prepare a slurry composition having a solid content concentration of 30 wt%.
The physical properties of the manufactured separator and battery were evaluated and are shown in Tables 1 and 2.

[Comparative Example 2]

A slurry composition was prepared in the same manner as in Example 1, except that the polyacrylamide-based resin "PAM1" was used alone as a binder.
That is, 97 wt% of boehmite (γ-AlO(OH)) having an average particle diameter of 600 nm and 3 wt% of the polyacrylamide-based resin "PAM1" were added to water as a solvent and stirred to prepare a slurry composition having a solid content concentration of 30 wt%.
The physical properties of the manufactured separator and battery were evaluated and are shown in Tables 1 and 2.

[Comparative Example 3]

A slurry composition was prepared in the same manner as in Example 1, except that polyethylene oxide was used alone as a binder.
That is, 97 wt% of boehmite (γ-AlO(OH), available from Nabaltec, Apyral AOH60) having an average particle diameter of 700 nm and 3 wt% of polyethylene oxide (Mv = 300,000 g/mol, CAS No: 25322-68-3, available from Sigma-Aldrich) were added to water as a solvent and stirred to prepare a slurry composition having a solid content concentration of

30 wt%.

The physical properties of the manufactured separator and battery were evaluated and are shown in Tables 1 and 2.

[Comparative Example 4]

A slurry composition was prepared in the same manner as in Example 1, except that a polyacrylamide-based resin (indicated as "PAM2" in the table, a copolymer of acrylic acid and acrylamide) was used alone as a binder.

That is, 97 wt% of boehmite (γ-AlO(OH)) having an average particle diameter of 600 nm and 3 wt% of the polyacrylamide-based resin (indicated as "PAM2" in the table, a copolymer of acrylic acid and acrylamide) were added to water as a solvent and stirred to prepare a slurry composition having a solid content concentration of 30 wt%.

The physical properties of the manufactured separator and battery were evaluated and are shown in Tables 1 and 2.

[Table 1]

| | Type of inorganic particles / average particle diameter | Binder | Coating thickness (μm) | Coating amount ($g/m^2$) | Gurley permeability (sec/10 0 cc) | Heat shrinkage rate at 130°C (%) MD/TD | Adhesive strength to strawboard |
|---|---|---|---|---|---|---|---|
| Ex. 1 | Boehmite 600 nm | PAM1+PEO | 4 | 3.9 | 93 | 1.5/1.0 | A |
| Ex. 2 | Barium sulfate 500 nm | PAM1+PEO | 4 | 6.2 | 101 | 0.7/0.5 | A |
| Ex. 3 | Boehmite 600 nm + Barium sulfate 500 nm | PAM1+PEO | 4 | 5.6 | 98 | 1.0/1.0 | A |
| Ex. 4 | Boehmite 600 nm + 300 nm | PAM1+PEO | 4 | 4.1 | 94 | 0.5/0.3 | A |
| Ex. 5 | Barium sulfate 800 nm + barium sulfate 500 nm | PAM1+PEO | 4 | 5.9 | 105 | 3.5/2.5 | A |
| Ex. 6 | Boehmite 600 nm | PAM2+PEO | 4 | 4.6 | 92 | 1.5/1.3 | A |
| Ex. 7 | Boehmite 600 nm | PVP+PEO | 4 | 4.1 | 99 | 4.5/3.8 | B |
| Ex. 8 | Boehmite 600 nm | PAM1+PVP + PEO | 4 | 4.0 | 95 | 3.3/2.7 | A |
| Comp Ex. 1 | Boehmite 600 nm | Acryl binder | 4 | 4.7 | 95 | 5.6/5.0 | B |
| Comp Ex.2 | Boehmite 600 nm | PAM1 | 4 | 5.0 | 90 | 0.5/0.5 | B |
| Comp Ex. 3 | Boehmite 600 nm | PEO | 4 | 4.1 | 83 | 11.0/9.5 | C |
| Comp Ex.4 | Boehmite 600 nm | PAM2 | 4 | 4.8 | 89 | 1.0/0.5 | B |
| (Ex.: Example; Comp Ex.: comparative example) | | | | | | | |

(Coating(loading) amount: Weight of coating layer per unit area of separator)

As shown in Table 1, it was confirmed that Examples 1 to 8 according to an example embodiment of the present

disclosure had higher Gurley permeability, lower heat shrinkage rates, and no adhesion in the strawboard adhesive strength test as compared with Comparative Examples 1 to 4.

In addition, the lithium secondary battery was manufactured as described above using the manufactured separator and the physical properties were measured.

[Initial resistance characteristics of lithium secondary battery]

Each battery manufactured by the assembly process according to the examples and the comparative Examples was charged at a constant current-constant voltage (CC-CV) of 4.2 V using a charge/discharge cycle instrument, and then discharged. Then, direct current internal resistance (DC-IR) was measured at 60% of state of charge (SOC) by a J-pulse method.

[Storage stability at 60°C]

Each battery (2Ah Cell) manufactured by an assembly process according to the Examples and the Comparative Examples was stored in an oven at 60°C for 24 days, direct current internal resistance (DC-IR) was measured by the J-pulse method described above, and then a resistance increase rate was calculated. The resistance increase rate ΔR was calculated from the following equation. The resistance of each example and comparative example was relatively evaluated based on Comparative Example 1, and the higher the numerical value, the lower the relative resistance increase rate.

$$\triangle R(\%) = (R_2 - R_1)/R_1 \times 100$$

wherein $R_1$ is an initial resistance before an experiment of each manufactured battery, and $R_2$ is a resistance after storing the battery at 60°C for 28 days.

The capacity retention rate △C was calculated from the following equation. The capacity of each example and comparative example was relatively evaluated based on Comparative Example 1, and the higher the numerical value, the lower the relative capacity retention rate.

ΔC (%) = [(discharge capacity after stored in oven for 28 days - discharge capacity before stored in oven)]/ (discharge capacity before stored in oven)] × 100

[400 cycle life]

Each battery manufactured by the assembly process according to the examples and the comparative Examples was charged at a constant current-constant voltage (CC-CV) of 4.2 V using a charge/discharge cycle instrument, and then discharged.

The lithium battery was charged at constant current with a 0.5 C rate at 25°C until the voltage reached 4.2 V, and charged at constant voltage until the current was 0.01 C while maintaining 4,2 V. Subsequently, a cycle of discharging at a constant current of 0.5 C until the voltage reached 3.0 V during discharging was repeated 400 times. The discharge capacity at the capacity retention rate of 400 cycles was measured and calculated, and as the resistance, direct current internal resistance (DC-IR) was measured by a J-pulse method and a resistance increase rate was calculated. The resistance of each example and comparative example was relatively evaluated based on Comparative Example 1, and the higher the numerical value, the lower the relative resistance increase rate.

$$\triangle R(\%) = (R_3 - R_1)/R_1 \times 100$$

wherein $R_1$ is an initial resistance before an experiment of each manufactured battery, and $R_3$ is a resistance after 400 cycles.

The capacity retention rate △C was calculated from the following equation. The capacity of each example and comparative example was relatively evaluated based on Comparative Example 1, and the higher the numerical value, the lower the relative capacity retention rate.

△C (%) = [(discharge capacity after 400 cycles - initial discharge capacity)/(initial discharge capacity)]/100

[Analysis of gas emission]

Gas emission was measured by preparing a 100% charged SOC battery, measuring volume using a density meter, storing the battery in an oven at 60°C for 10 weeks, and measuring the volume in the same manner. The volume changed relative to the volume at 0 weeks of storage (Volume increase rate △V) was calculated by the following equation. Change in volume in each example and comparative example was relatively evaluated based on Comparative Example 1, and the lower the numerical value, the less the gas emission.

Volume increase rate $\Delta V$ (%) = [volume at 10th week - volume at 0th week)/volume at 0th week] $\times$ 100

As described above, the physical properties of the batteries of the remaining examples and comparative examples were relatively evaluated based on Comparative Example 1.

The results are shown in the following Table 2.

[Table 2]

| | Initial performance | | | 400 cycle life | | High-temperature storage (6 W) | | Gas analysis (8 W) |
|---|---|---|---|---|---|---|---|---|
| | Power (W/kg) | ACIR (mΩ) | DCIR (mΩ) | Capacity retention rate (Ah) | Resistance increase rate (mΩ) | Capacity retention rate (Ah) | Resistance increase rate (mΩ) | Gas emission (ml) |
| Ex.1 | Eq. | Eq. | Eq. | Eq. | 6.7% lower | 5.3% higher | 6.5% lower | 6.3% lower |
| Ex.2 | Eq. | 4% lower | 2% lower | Eq. | 7.7% lower | 9.0% higher | 8.0% lower | 15.4% lower |
| Ex. 3 | Eq. | 4% lower | 3% lower | Eq. | 6.5% lower | 8.5% higher | 7.7% lower | 8.3% lower |
| Ex.4 | Eq. | 3% lower | Eq. | Eq. | 5.7% lower | 6.2% higher | 7.5% lower | 7.1% lower |
| Ex. 5 | Eq. | Eq. | Eq. | Eq. | 7.2% lower | 7.9% higher | 7.8% lower | 11.7% lower |
| Ex. 6 | Eq. | Eq. | Eq. | Eq. | Eq. | 4.4% higher | 5.5% lower | 4.6% lower |
| Ex.7 | Eq. | Eq. | Eq. | Eq. | 3.6% lower | 5.1% higher | 5.8% lower | 5.3% lower |
| Ex.8 | Eq. | Eq. | Eq. | Eq. | 4.0% lower | 5.7% higher | 6.3% lower | 6.1% lower |
| Comp Ex.1 | Eq. | St. | St. | St. | St. | St. | St. | St. |
| Comp Ex.2 | Eq. | Eq. | Eq. | Eq. | 3.3% higher | Eq. | 5.7% higher | 2% higher |
| Comp Ex. 3 | 5% lower | 5% higher | 7% higher | 4% lower | 7.0% higher | 9.5% lower | 20% higher | 25% higher |
| Comp Ex.4 | Eq. | Eq. | Eq. | Eq. | 4.6% higher | Eq. | 10% higher | Eq. |

(Ex.: Example; Comp Ex.: comparative example; Eq.: Equivalent; St.: Standard)As shown in Table 2, when the separators of Examples 1 to 8 according to an example embodiment of the present disclosure were applied, the capacity retention rate was higher and a resistance increase was lower during storing the battery at a high temperature, as compared with the case of applying an acryl-based binder as in Comparative Example 1, and thus, it was confirmed that the high-temperature storage stability was excellent. In addition, the capacity retention rate was high and the resistance

increase rate was low in the 400 cycle characteristics, and thus, excellent long-term battery characteristics were confirmed. Also, low gas emission was confirmed.

In addition, Examples 1 to 8 showed better physical properties as compared with the case using only one type of binder as in Comparative Examples 2 to 4, and thus, it was confirmed that the high-temperature storage characteristics and long-term life of the battery were improved due to the combined use of a specific binder.

In addition, as shown in Examples 1 to 5, when a ternary acrylamide-based crosslinked copolymer and specific inorganic particles were combined and used, the effect was better than in Example 6.

In addition, when barium sulfate, boehmite, and a mixture thereof were used as inorganic particles, gas emission was significantly decreased as compared with the case of using other types of inorganic particles.

The separator according to an example embodiment of the present disclosure may have low thermal shrinkage, excellent permeability, and excellent adhesion.

In addition, a lithium secondary battery using the separator according to an example embodiment of the present disclosure has a high capacity retention rate and a low resistance increase during storage at a high temperature, thereby providing an excellent high temperature stability effect.

In addition, the lithium secondary battery using the separator according to an example embodiment of the present disclosure has a high capacity retention rate and a low resistance increase rate in 400 cycle characteristics, thereby providing an excellent long-term battery capacity effect.

In addition, the lithium secondary battery using the separator according to an example embodiment of the present disclosure may provide an effect of significantly decreasing gas emission.

The above description is only an example to which the principle of the present disclosure is applied, and other constitutions may be further comprised without departing from the scope of the present disclosure.

Hereinabove, although the present disclosure has been described by the specific matters and limited example embodiments in the present disclosure, they have been provided only for assisting the entire understanding of the present disclosure, and the present disclosure is not limited to the example embodiments, and various modifications and changes may be made by those skilled in the art to which the present disclosure pertains from the description.

## Claims

**1.** A separator comprising a porous substrate and a coating layer on one or both surfaces of the porous substrate, wherein the coating layer comprises a water-soluble composite binder and inorganic particles, wherein the water-soluble composite binder comprises a polyethylene oxide and a nitrogen-containing water-soluble polymer.

**2.** The separator of claim 1, wherein the nitrogen-containing water-soluble polymer comprises any one or two or more selected from the group consisting of polyvinylpyrrolidone, polyvinylpyrrolidone-based copolymers, and polyacrylamide-based resins,

Preferably is selected from polyacrylamide-based resins, wherein the polyacrylamide-based resin is a polyacrylamide-based copolymer comprising a unit derived from a (meth)acrylamide-based monomer and a unit derived from a comonomer,
more preferably, wherein the polyacrylamide-based resin comprises: (a) a structural unit derived from a (meth) acrylamide-based monomer, (b) a structural unit derived from a hydroxyl group-containing (meth)acryl-based monomer, and (c) a structural unit derived from a polyfunctional (meth)acrylamide-based monomer.

**3.** The separator of claim 2, wherein the polyacrylamide-based resin has a weight average molecular weight of 100,000 to 2,000,000 g/mol.

**4.** The separator of any one of claims 1 to 3, wherein the inorganic particles comprise any one or more selected from boehmite and barium sulfate,
optionally, wherein the inorganic particles further comprise one or two or more types of inorganic particles selected from alumina, silica, aluminum hydroxide, magnesium hydroxide, calcium oxide, magnesium oxide, titanium oxide, aluminum nitrides, $SrTiO_3$, $SnO_2$, $CeO_2$, NiO, ZnO, $ZrO_2$, $Y_2O_3$, and SiC.

**5.** The separator of any one of claims 1 to 4, wherein the inorganic particles include a mixture of two or more types of inorganic particles having different average particle diameters, preferably two or more types of boehmite and barium sulfate particles respectively with a mixture of two or more having different average particle diameters.

**6.** The separator of any one of claims 1 to 5, wherein the inorganic particles have an average diameter of 200 to 1000 nm.

7. The separator of any one of claims 1 to 6, wherein the coating layer has a weight ratio between the inorganic particles and the water-soluble composite binder of 50:50 to 99.9:0.1.

8. The separator of any one of claims 1 to 7, wherein the content of the polyethylene oxide is 1 to 50 wt% of the total content of the water-soluble composite binder.

9. The separator of any one of claims 1 to 8, wherein the polyethylene oxide and the nitrogen-containing water-soluble polymer are comprised at a weight ratio of 10:90 to 90:10.

10. The separator of any one of claim 1 to 9, wherein the water-soluble composite binder further comprises any one or two or more resins selected from the group consisting of polyvinyl acetate, acryl-based resins, polyvinylidene fluoride, polyvinylidene fluoride-hexafluoropropylene copolymer, polyvinylidene fluoride-trichloroethylene copolymer, polyvinylidene fluoride-chlorotrifluoroethylene copolymer, polymethylmethacrylate, polyacrylonitrile, ethylene vinyl acetate copolymer, carboxymethyl cellulose, and polyimide.

11. The separator of any one of claims 1 to 10, wherein a thickness of the coating layer is 0.1 to 50% of a total thickness of the separator.

12. The separator of any one of claims 1 to 11, wherein the coating layer is formed with a loading of 0.5 to 10 g/$m^2$.

13. The separator of any one of claims 1 to 12, wherein the porous substrate is any one or a lamination of two or more selected from the group consisting of a porous film, a nonwoven fabric, and a woven fabric.

14. The separator of any one of claims 1 to 13, wherein the porous substrate has a thickness of 1 to 80 pm.

15. A lithium secondary battery comprising the separator according to any one of the preceding claims.